# EUROPEAN PATENT APPLICATION

(11) **EP 0 522 710 A1**
(43) Date of publication of application: **13.01.1993**
(21) Application number: 92305224.5
(22) Date of filing: 08.06.1992
(51) Int. Cl.: C08F 279/02, C08F 279/04, C08F 279/06

(54) **ABS graft copolymers and compositions thereof**

(30) Priority: 11.06.1991 US 713217
(71) Applicant: GENERAL ELECTRIC COMPANY, Schenectady, NY 12345 (US)
(72) Inventor: Taylor, Stephen Lee, Washington, West Virginia 26181 (US); Curfman, Don Carl, Washington, West Virginia 26181 (US)
(74) Representative: Pratt, Richard Wilson

(57) **Abstract**

A graft copolymer comprises (a) a rubber substrate formed from a diene monomer and a styrene monomer and having an average latex particle size of not greater than about 100 nm, and (b) a grafted portion formed from at least one styrene monomer and an acrylic monomer. The graft copolymer is formed by an emulsion polymerization process employing a thermally activated initiator system which provides carbon radicals during the polymerization process.

## Description

### FIELD OF THE INVENTION

The present invention relates to ABS graft copolymers and to compositions containing the ABS graft copolymers, which compositions exhibit low gloss, improved multiaxial impact resistance, reduced opacity and/or good base coloring.

### FIELD OF THE INVENTION

ABS graft copolymers are well known in the art and exhibit various combinations of physical properties. Various methods have been employed for forming ABS graft copolymers, and emulsion polymerization processes are well known for this purpose. It is also well known to blend ABS graft copolymers with one or more additional thermoplastic polymers in order to provide blend compositions having a desired combination of physical and chemical properties.

For example, European Reference No.129, 796 and Japanese Reference No. 63-182368 disclose ABS graft copolymers prepared by grafting an aromatic vinyl compound such as styrene and a cyanovinyl compound such as acrylonitrile on a polybutadiene rubber substrate. The Tokas U.S. Patent No. 4,252,912 and European Reference No. 201,099 are specifically directed to low gloss ABS resins. According to Tokas, a conjugated diolefin monomer, an alkenyl aromatic monomer and an alkenyl nitrile monomer are grafted to rubber particles. According to the European reference, a 2-step polymerization process is employed for producing the low gloss resin. The Rushton U.S. Patent No. 3,607,983 and German Reference No. 2,057,935 disclose ABS graft copolymers having high impact strengths and formed from vinyl aromatic and vinyl cyanide monomers which are grafted to butadiene-styrene latex polymers. The Aliberti U.S. Patent No. 3,928,494 and the Netherlands Reference No. 8602516 further disclose ABS graft copolymers formed by graft polymerizing a monomer mixture on a rubber substrate. These references also disclose that the graft copolymers exhibit improved impact strength.

Generally, ABS resins which are known in the art and which are commercially available often exhibit one or more advantageous physical properties such as high impact strength or low gloss in combination with one or more less desirable physical properties. Thus, a need exists for new ABS resins which exhibit advantageous combinations of physical properties including low gloss, high impact strength, reduced opacity and good base coloring which resists yellowing.

### SUMMARY OF THE INVENTION

Accordingly, it is an object of the present invention to provide new ABS graft copolymer compositions which exhibit an advantageous combination of physical properties. It is a further object of the invention to provide ABS graft copolymers which may be combined with one or more additional thermoplastic polymers to provide blend compositions having advantageous combinations of physical properties. A further object of the invention comprises providing polymer blends including ABS graft copolymers, which blends exhibit low gloss, improved multiaxial impact strength, reduced opacity, and good base coloring which resists yellowing.

These and additional objects are provided by the graft copolymers and polymer blend compositions of the present invention. More particularly, the graft copolymers of the present invention comprise a rubber substrate and a grafted portion grafted thereto. The rubber substrate is formed from a diene monomer and a styrene monomer and has an average latex particle size of not greater than about 100 nm. The grafted portion is formed from at least one styrene monomer and an acrylic monomer. The ABS graft copolymer is formed by an emulsion polymerization process employing a thermally activated initiator system which provides carbon radicals during the polymerization process. The graft copolymers of the present invention are adapted for blending with one or more additional thermoplastic polymers to provide compositions exhibiting low gloss, improved multiaxial impact strength, low opacity and/or good base coloring which resists yellowing.

These and additional objects and advantages provided by the present invention will be more fully understood in view of the following detailed description.

### DETAILED DESCRIPTION

The graft copolymers of the present invention comprise a rubber substrate formed from a diene monomer and a styrene monomer. Preferably, the diene monomer is a conjugated diene monomer of the following formula: 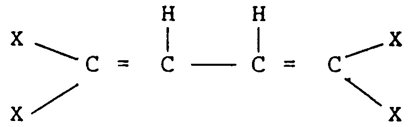
wherein X is selected from the group consisting of hydrogen, alkyl groups containing from 1 to 5 carbon atoms, chlorine and bromine. Examples of the diene monomer include butadiene, isoprene, 1, 3-heptadiene, methyl-1,3-pentadiene, 2-ethyl-1,3-pentadiene, mixtures thereof and the like. Preferably, the diene monomer comprises butadiene.

The styrene monomer which is employed to form the rubber substrate may comprise unsubstituted styrene monomer, substituted styrene monomer, or mixtures thereof. Substituted styrene monomers may include substituents on the aromatic portion and/or the vinyl portion, and the substituents are selected from the group consisting of alkyl groups of from 1 to 5 carbon atoms and halogens. Preferably, the styrene monomer which is used to form the rubber substrate comprises unsubstituted styrene.

It is further preferred that the rubber substrate is formed from at least 50 weight percent of the diene monomer, preferably butadiene, and more preferably from at least 75 weight percent of the diene monomer. Additionally, the rubber substrate is preferably formed from at least 5 weight percent of the styrene monomer. In accordance with an important feature of the invention, the rubber substrate has an average latex particle size of not greater than about 100 nm. It is believed that this contributes to improvements in opacity reduction in polymer blends containing the ABS graft copolymers. In another embodiment, the rubber substrate also has a gel content of greater than 80% by weight.

The grafted portion of the ABS graft copolymers according to the present invention is formed from at least one styrene monomer and an acrylic monomer. The styrene monomer may comprise unsubstituted styrene monomer, substituted styrene monomer, or mixtures thereof. Substituted styrene monomers may be substituted on the aromatic portion and/or the vinyl portion with one or more groups selected from hydrogen, alkyl groups of from 1 to 5 carbon atoms, cycloalkyl groups, aryl groups, alkaryl groups, aralkyl groups, alkoxy groups, aryloxy groups and halogen atoms. Examples of substituted styrene monomers suitable for use in forming the grafted portion of the present copolymers include alpha-methylstyrene, alphamethylvinyltoluene, chlorostyrenes, bromostyrenes, 4-methylstyrene, 3, 5-diethylstyrene, 4-n-propylstyrene, mixtures thereof and the like. Preferred styrene monomers for use in the grafted portion include styrene, alpha-methylstyrene and mixtures thereof.

The acrylic monomer which is used to form the grafted portion of the present copolymers is preferably selected from acrylonitrile, substituted acrylonitrile and acrylic acid esters such as alkyl acrylates and alkyl methacrylates, wherein the alkyl groups contain from 1 to 4 carbon atoms. Preferably, the acrylic monomer comprises acrylonitrile, methyl methacrylate or mixtures thereof, and more preferably comprises acrylonitrile.

The grafted portion may contain the styrene monomer and the acrylic monomer in any desired ratio. It is preferred, however, that the styrene monomer and the acrylic monomer are employed in a weight ratio of from about 1:1 to about 10:1.

The graft copolymers of the present invention may comprise the rubber substrate and the grafted portion in any desired ratio. It is preferred, however, that the graft copolymers comprise from about 20 to about 80 weight percent of the rubber substrate and from about 80 to about 20 weight percent of the grafted portion. More preferably, the graft copolymers comprise at least 40 weight percent of the rubber substrate, whereby the polymers are of the high rubber graft (HRG) type.

The graft copolymers of the invention are formed by an emulsion polymerization process. Emulsion polymerization processes are well known in the art and are commonly employed for producing ABS resins. However, in accordance with an important feature of the invention, a thermally activated initiator system which provides carbon radicals is employed during the emulsion polymerization process. In a preferred embodiment, the thermally activated initiator system comprises a carbon radical producing initiator such as an azonitrile initiator and, optionally, a peroxydisulate coinitiator. This feature provides graft copolymers which form blend compositions having improved multiaxial impact strength and good base coloring which resists yellowing. As is known in the art, emulsion polymerization processes often result in a mixture of the grafted copolymer and a rigid copolymer formed from the same monomers which are grafted to the rubber substrate. In the present specification, reference to the graft copolymer includes such mixtures.

The graft copolymers of the invention are particularly suitable for blending with one or more additional thermoplastic polymers to provide blend compositions having advantageous combinations of physical properties. The graft copolymers may be blended with one or more of various thermoplastic polymers well known in the art including, for example, styrenic polymers, polycarbonates, polyvinyl chlorides and the like. In a preferred embodiment, the graft copolymers of the invention are blended with one or more styrenic polymers, for example, styrene homopolymers and/or styrene copolymers. Styrene copolymers suitable for use with the graft copolymers of the invention include styrene-acrylic copolymers such as styrene-acrylonitrile copolymers, styrenemethyl methacrylate copolymers and styreneacrylonitrile-methyl methacrylate copolymers. These styrenic polymers may be formed from unsubstituted styrene monomer, substituted styrene monomer such as alpha-methylstyrene, or mixtures thereof. Other styrenic polymers known in the art may also be employed in combination with the graft copolymers of the present invention to provide polymer blend compositions. It is preferred that the blend compositions of the invention contain from about 5 to about 95 weight percent of the graft copolymer and from about 95 to about 5 weight percent of the at least one additional thermoplastic polymer. More preferably, the compositions contain from about 20 to about 80 weight percent of the graft copolymer and from about 80 to about 20 weight percent of the at least one additional thermoplastic polymer.

The following examples demonstrate the graft copolymers and blend compositions according to the present invention. Unless otherwise specified, all parts and percentages in the examples are by weight.

### EXAMPLE 1

In this example, graft copolymers according to the present invention and comparative graft copolymers were prepared. The graft copolymers were prepared using emulsion polymerization processes wherein 50 parts by weight of monomers comprising styrene and acrylonitrile were polymerized in the presence of 50 parts by weight of the rubber substrate. Graft copolymers 1 and 4 (CP-1 and CP-4) were prepared according to the present invention while graft copolymers 2, 3, 5 and 6 (CP-2, CP-3, CP-5 and CP-6) were prepared for comparison purposes. In copolymers 1, 4, 5 and 6, styrene-butadiene rubber substrates containing 15 weight percent styrene and 85 weight percent butadiene were employed while in copolymers 2 and 3 a polybutadiene rubber substrate containing no styrene was employed. Additionally, in the emulsion polymerization of copolymers 1, 2, 3, 4 and 5, a thermally activated initiator system comprising a mixture of an azonitrile and a peroxydisulfate was employed. Copolymer 6 was prepared by an emulsion polymerization process using a redox activated cumene hydroperoxide initiator system. The average particle size of the rubber latex, the styrene to acrylonitrile weight ratio of the grafted portion, the type of substrate included in the copolymer and the type of initiator employed in the polymerization process for each graft copolymer are summarized in Table I.

**TABLE I**

| Graft Copolymer | Substrate | Latex Particle Size | S:AN Weight Ratio | Initiator |
|---|---|---|---|---|
| CP-1 | SBR | 80 nm | 3.5:1 | Thermal |
| CP-2 | BR | 80 nm | 3.5:1 | Thermal |
| CP-3 | BR | 80 nm | 2.6:1 | Thermal |
| CP-4 | SBR | 80 nm | 2.6:1 | Thermal |
| CP-5 | SBR | 295 nm | 2.6:1 | Thermal |
| CP-6 | SBR | 80 nm | 2.6:1 | Redox |

### EXAMPLE 2

In this example, graft copolymers 1 and 2 from Example 1 were employed to form polymer blend compositions. Specifically, 34 parts by weight of the respective graft copolymer were combined with 34 parts by weight of a styrene-acrylonitrile copolymer and 32 parts by weight of a styrene-acrylonitrile-methyl methacrylate copolymer. The copolymers were melt blended using a Banbury mixer. Samples of the resulting blend compositions were subjected to measurement of Dynatup impact strength according to a modified version of ASTM D-3763-85, opacity and gloss. Opacity was measured by contrast ratio measurements using a Hunterlab-Labscan II spectrocolormeter and a Hunterlab procedure. Gloss was measured according to ASTM D-523. The results of these measurements are set forth in Table II, wherein the blend containing graft copolymer 1 is identified by CP-1 and the blend containing copolymer 2 is identified by CP-2.

**TABLE II**

| Graft Copolymer in Blend | CP-1 | CP-2 |
|---|---|---|
| Dynatup Impact, ft-lbs, | | |
| 72°F | 28.8 | 18.3 |
| -20°F | 8.3 | 6.6 |
| Opacity, % | 74 | 80 |
| Gloss, 60° | 33 | 45 |

The results set forth in Table II demonstrate that the blend composition containing the graft copolymer formed from a small particle styrene-butadiene rubber substrate exhibited improved multiaxial impact resistance and lower opacity as compared with the blend composition including the graft copolymer formed from a small particle butadiene rubber substrate containing no styrene. The improvements in impact strength, particularly at -20°F, are particularly surprising in view of the fact that the styrene-butadiene rubber substrate employed in the graft copolymer of the present invention has a higher glass transition temperature Tg as compared with the butadiene rubber substrate employed in the comparison graft copolymer.

### EXAMPLE 3

In this example, polymer blend compositions were prepared from graft copolymers 1 and 3, respectively, and a styrene-acrylonitrile-alpha-methylstyrene terpolymer. The blend compositions contained 34 parts by weight of the graft copolymer and 66 parts by weight of the terpolymer, and were formed by melt blending using a Banbury mixer. Samples of the resulting blend compositions were subjected to measurement of Dynatup impact strength and opacity using the procedures described in Example 2, and notched Izod impact strength according ASTM-D256. The results of these measurements are set forth in Table III.

**TABLE III**

| Graft Copolymer in Blend | CP-1 | CP-3 |
|---|---|---|
| Dynatup Impact, ft-lbs, 72°F | 22.7 | 20.2 |
| Notched Izod, ft-lbs/in | 5.9 | 4.6 |
| Opacity, % | 85 | 92 |

The results set forth in Table III demonstrate that the blend composition according to the present invention containing an ABS graft copolymer formed from a styrene-butadiene rubber substrate having an average latex particle size of 80 nm exhibited improved multiaxial and Izod impact strengths and reduced opacity as compared with the blend composition including the ABS graft copolymer formed from a butadiene rubber substrate containing no styrene and having an average latex particle size of 80 nm.

### EXAMPLE 4

In this example, blend compositions were prepared from graft copolymers 4, 5 and 6, respectively, a styrene-acrylonitrile copolymer and a styreneacrylonitrile-methyl methacrylate copolymer. Specifically, the blend compositions contained 34 parts by weight of the respective graft copolymer, 34 parts by weight of the styrene-acrylonitrile copolymer and 32 parts by weight of the styrene-acrylonitrile-methyl methacrylate copolymer. The compositions were melt blended using a Banbury mixer. Samples of the resulting blend compositions were subjected to measurement of Dynatup impact, opacity and gloss using the procedures described in Example 2 and base coloring using the Yellowness Index (YI) according to ASTM E-313. The results of these measurements are set forth in Table IV.

**TABLE IV**

| Graft Copolymer in Blend | CP-4 | CP-5 | CP-6 |
|---|---|---|---|
| Dynatup Impact, ft-lbs, | | | |
| 72°F | 27.2 | 30.7 | 17.2 |
| -20°F | 7.0 | 5.7 | 5.8 |
| Opacity, % | 75 | 83 | 74 |
| Gloss, 60° | 37 | 67 | 42 |
| YI | 26 | 28 | 35 |

A comparison of the blend compositions containing graft copolymers 4 and 5, respectively, demonstrates that the blend composition according to the present invention containing an ABS graft copolymer formed from the styrene-butadiene rubber substrate having an average latex particle size of 80 nm exhibited a significant reduction in opacity and gloss as compared with the blend composition including the ABS graft copolymer formed from a styrene-butadiene rubber substrate having an average latex particle size of 295 nm. Moreover, a comparison of the blend compositions prepared from graft copolymers 4 and 6, respectively, demonstrates that the blend composition according to the present invention containing the graft copolymer prepared using a thermally activated initiator system exhibited superior multiaxial impact resistance and better base coloring as compared with the blend composition containing an ABS graft copolymer formed using the redox initiator system.

The preceding examples are set forth to illustrate specific embodiments of the invention and are not intended to limit the scope of the compositions of the present invention. Additional embodiments and advantages within the scope of the claimed invention will be apparent to one of ordinary skill in the art.

## Claims

1. A graft copolymer comprising (a) a rubber substrate formed from a diene monomer and a styrene monomer and having an average latex particle size of not greater than about 100 nm, and (b) a grafted portion formed from at least one styrene monomer and an acrylic monomer, the graft copolymer being formed by an emulsion polymerization process employing a thermally activated initiator system which provides carbon radicals during the polymerization process.

2. A graft copolymer as defined by Claim 1, wherein the rubber substrate is formed from butadiene and styrene.

3. A graft polymer as defined by Claim 1 or Claim 2, wherein the rubber substrate is formed from at least 75 weight percent of the diene monomer.

4. A graft copolymer as defined by any preceding claim, wherein the rubber substrate is formed from at least 50 weight percent of the diene monomer.

5. A graft copolymer as defined by any preceding claim, wherein the rubber substrate is formed from at least 5 weight percent of the styrene monomer.

6. A graft copolymer as defined by any preceding claim, wherein the rubber substrate has a gel content of greater than 80% by weight.

7. A graft copolymer as defined by any preceding claim, wherein the grafted portion is formed from at least one styrene monomer and at least one monomer selected from acrylonitrile, alkyl acrylates and alkyl methacrylates.

8. A graft copolymer as defined by any preceding claim, wherein the grafted portion is formed from at least one styrene monomer, acrylonitrile, and methyl methacrylate.

9. A graft copolymer as defined by any preceding claim, wherein the styrene monomer and the acrylic monomer are employed in a weight ratio of from about 1:1 to about 10@1.

10. A graft copolymer as defined by any preceding claim, comprising from about 20 to about 80 weight percent of the rubber substrate and from about 80 to about 20 weight percent of the grafted portion.

11. A graft copolymer as defined by any preceding claim, comprising at least 40 weight percent of the rubber substrate.

12. A graft copolymer as defined by any preceding claim, wherein the thermally activated initiator system comprises a carbon radical producing initiator.

13. A polymer blend composition, comprising (a) a graft copolymer comprising (i) a rubber substrate formed from a diene monomer and a styrene monomer having an average latex particle size of not greater than about 100 nm, and (ii) a grafted portion formed from at least one styrene monomer and an acrylic monomer, the graft copolymer being formed by an emulsion polymerization process employing a thermally activated initiator system which provides carbon radicals during the polymerization process, and (b) at least one additional thermoplastic polymer.

14. A polymer blend composition as defined by Claim 13, wherein the at least one additional thermoplastic polymer comprises a styrenic polymer.

15. A polymer blend composition as defined by Claim 14, wherein the styrenic polymer is formed from at least one styrene monomer and at least one acrylic monomer.

16. A polymer blend composition as defined by Claim 14, wherein the styrenic polymer is formed from styrene and at least one acrylic monomer selected from the group consisting of acrylonitrile and methyl methacrylate.

17. A polymer blend composition as defined by Claim 13, comprising from about 5 to about 95 weight percent of the graft copolymer and from about 95 to about 5 weight percent of the at least one additional thermoplastic polymer.

18. A polymer blend composition as defined by Claim 13 or Claim 14, comprising from about 20 to about 80 weight percent of the graft copolymer and from about 80 to about 20 weight percent of the at least one additional thermoplastic polymer.

19. A process for preparing the graft copolymer or copolymer blend of any preceding claim comprising emulsion polymerising in the presence of a thermally activated initiator system a mixture comprising (a) at least one styrene monomer (b) an acrylic monomer and (c) a rubber substrate comprising a diene monomer and a styrene monomer and having an average particle size of not greater than about 100nm.
